# EUROPEAN PATENT SPECIFICATION

(11) **EP 3 118 646 B1**
(45) Date of publication and mention of the grant of the patent: **06.01.2021**
(21) Application number: 16178482.2
(22) Date of filing: 07.07.2016
(51) Int. Cl.: G01S 5/02, G01S 1/08

(54) **ROBUST INDOOR LOCALIZATION BY PARTITIONING SPACE**
ROBUSTE INNENRAUMLOKALISIERUNG DURCH PARTITIONIERUNGSRAUM
LOCALISATION INTÉRIEURE ROBUSTE PAR PARTITIONNEMENT D'ESPACE

(30) Priority: 17.07.2015 US 201514802658
(43) Date of publication of application: 18.01.2017
(73) Proprietor: Samsung Electronics Co., Ltd., Gyeonggi-do 16677 (KR)
(72) Inventor: LI, Zhiyun, Kenmore, WA Washington 98028 (US)
(74) Representative: HGF

(56) References cited:
- EP-A1- 1 241 909
- US-A1- 2003 146 835
- US-A1- 2014 087 752

## Description

### TECHNICAL FIELD

The present application relates generally to Smart Home systems and, more specifically, to an in-door room detection and location system using beacons which is installed in the in-door room.

### BACKGROUND

One of the key features of a Smart Home system is the "indoor localization" function, wherein the location of a user can be tracked within or around a home or office. The user is generally tracked and identified using his or her personal mobile devices, such as a smartphone or a wearable device. If the user location is tracked properly, then the Smart Home system can determine in which room every person in the home or office is located. Knowing the location and identity of each user inside a structure, a Smart Home system can provide further personalization and automation services (e.g., changing music in a room, adjusting temperature, directing phone calls, relaying location information between people, etc.).

However, prior art indoor localization technologies suffer significant problems. The major challenges are environmental noise and device calibration. The prior art technologies generally may be classified into a small number of categories:
1) EM footprint: An electromagnetic (EM) footprint system assumes that at each indoor location, the EM signal is stationary and unique. So as a pre-processing step, this method measures and stores the EM footprint across the whole floor at each indoor location and uses the stored EM footprint as a look-up table for later localization. In real-world environments, however, the EM signal frequently is not stationary, environmental noise can be very significant, and each mobile device has to be calibrated and held the same way as the measurement device.
2) Triangulation: Triangulation systems use multiple installed radio frequency (RF) emitters (e.g., Wi-Fi hotspot, BLE beacon, etc.) across the floor space at known locations. Using the received signal strength indicator (RSSI) from each emitter, the mobile device calculates the distance from each emitter, thereby estimating the X-Y location. In real-world environments, however, the RSSI can be very noisy and heavily depend on the room environment and even the way the user holds his or her mobile device. Thus, the calculated location is often incorrect.

Motion sensor, floor mat pressure sensor: These systems approaches can detect whether a person is in a particular room, but cannot tell the identity of the person, which prevents the Smart Home system from providing further personalization and automation services.

Therefore, there is a need in the art for improved apparatuses and methods for locating a person within a house, office, or similar structure. In particular, there is a need for a Smart Home system that can locate a user within a structure with a high degree of accuracy. US-2014/087752-A1 relates to utilizing Bluetooth beacons for location determination of a mobile device. A Wi-Fi signal scan and a Bluetooth beacon scan are initiated at a mobile device. A location of the mobile device is determined based on at least on at least one Bluetooth beacon detectable by the mobile device, where the at least one Bluetooth beacon is transmitted from a first location, and where the first location is the location of the mobile device. A user of the mobile device is prompted for location information input, in response to determining that no Bluetooth beacons are detectable by the mobile device or when the at least one Bluetooth beacon detected is determined to be transmitted from a second location different from the location of the mobile device.

### SUMMARY

To address the above-discussed deficiencies of the prior art, it is an aim of certain embodiments to provide a mobile device comprising: i) receive path circuitry configured to detect signals transmitted by a plurality of wall-mounted beacons in a structure in which the mobile device is located, the receive path circuitry further configured to determine a received signal strength indicator (RSSI) value associated with each detected beacon and to determine an identification (ID) value transmitted by each detected beacon; ii) a memory configured to store a floor plan of the structure; and iii) processing circuitry configured to identify a first detected beacon and a second detected beacon mounted on opposing sides of a first wall using the floor plan and the transmitted ID values of the first and second detected beacons. The processing circuitry uses the RSSI value of the first detected beacon and the RSSI value of the second detected beacon to determine if the mobile device is on the same side of the first wall as the first detected beacon or the second detected beacon.

It is an aim of certain embodiments of the invention to provide a mobile device in which the processing circuitry compares the relative strengths of the RSSI value of the first detected beacon and the RSSI value of the second detected beacon to determine if the mobile device is on the same side of the first wall as the first detected beacon or the second detected beacon.

It is an aim of certain embodiments of the invention to provide a mobile device in which processing circuitry is configured to identify a third detected beacon and a fourth detected beacon mounted on opposing sides of a second wall using the floor plan and the transmitted ID values of the third and fourth detected beacons. The processing circuitry uses the RSSI value of the third detected beacon and the RSSI value of the fourth detected beacon to determine if the mobile device is on the same side of the second wall as the third detected beacon or the fourth detected beacon.

It is an aim of certain embodiments of the invention to provide a mobile device in which processing circuitry compares the relative strengths of the RSSI value of the third detected beacon and the RSSI value of the fourth detected beacon to determine if the mobile device is on the same side of the second wall as the third detected beacon or the fourth detected beacon.

It is an aim of certain embodiments of the invention to provide a mobile device in which processing circuitry is configured, after determining whether the mobile device is on the same side of the first wall as the first detected beacon or the second detected beacon and determining whether the mobile device is on the same side of the second wall as the third detected beacon or the fourth detected beacon, to use the floor plan to determine a room in which the mobile device is located.

A plurality of wall-mounted beacons may comprise Bluetooth Low Energy (BLE) beacons.

The floor plan may indicate locations of rooms and walls of the structure, locations of the plurality of wall-mounted beacons, and ID values of each of the plurality of wall-mounted beacons.

In accordance with a first aspect of the invention, a mobile device comprises a transceiver, and a controller operatively coupled to the transceiver, wherein the controller is configured to: detect a first signal transmitted from a first beacon device and a second signal transmitted from a second beacon device, wherein the first beacon is installed on a first side of a wall and the second beacon is installed on a second side of the wall opposite to the first side of the wall, such that the first beacon device and the second beacon device are installed back-to-back on each side of the wall; identify an identification value associated with each of the first beacon device and the second beacon device based on the first signal and the second signal; compare a strength of the first signal and a strength of the second signal; determine a beacon device among the first beacon device and the second beacon device based on a result of the comparison and the identification values; and determine a side of the wall corresponding to a location of the mobile device based on the determined beacon.

In accordance with a second aspect of the invention, an method in a mobile device comprises: detecting a first signal transmitted from a first beacon device and a second signal transmitted from a second beacon device, wherein the first beacon device is installed on a first side of a wall and the second beacon device is installed on a second side of the wall opposite to the first side of the wall, such that the first beacon device and the second beacon device are installed back-to-back on each side of the wall; identifying an identification value associated with each of the first beacon device and the second beacon device based on the first signal and the second signal; comparing a strength of the first signal and a strength of the second signal; determining a beacon device among the first beacon device and the second beacon device based on a result of the comparison and the identification values; and determining a side of the wall corresponding to a location of the mobile device based on the determined beacon device.
Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates exemplary installed Bluetooth Low Energy (BLE) beacons according to an embodiment of the disclosure.
FIGURE 2 illustrates an exemplary building floor plan with installed Bluetooth Low Energy (BLE) beacons according to an embodiment of the disclosure.
FIGURE 3 illustrates an exemplary mobile device that includes a room detection and location system according to an embodiment of the disclosure.
FIGURE 4 is a flow diagram illustrating the operation of an exemplary room detection and location system according to an embodiment of the disclosure.
FIGURE 5 illustrates a scenario in which a beacon in a different room has a stronger received signal due to reflections and occlusions.
FIGURE 6 a flow diagram illustrating the operation of an exemplary room detection and location system according to another embodiment of the disclosure.

### DETAILED DESCRIPTION

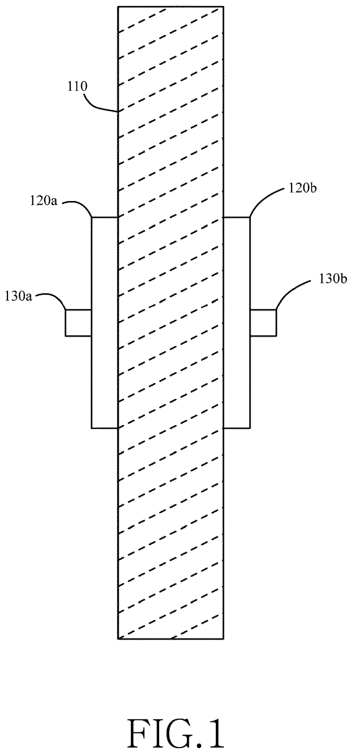

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile device.

The present disclosure describes a robust indoor room detection and location system that uses pairs of Bluetooth Low Energy (BLE) beacons to partition the interior space of a home or an office. The disclosed system is robust against a wide range of environmental noises, as well as various BLE antenna specifications and the body position of the user. Instead of pursuing the prior art objective of determining the exact X-Y location of the user, the disclosed apparatuses and methods only determine the sub-space (i.e., the room) in which the user is located, but with high degree of accuracy. The disclosed technology takes advantage of the fact that it is far more important and useful to know accurately the room in which a user is located than it is to try to determine the exact X-Y position of the user, particularly when the X-Y position is frequently inaccurate.

This disclosed apparatuses and methods solve the above-described problems in the prior art by, for each wall of a home or office, detecting which side of the wall is facing the user, instead of detecting the exact location. For each wall of the structure, two identical BLE beacons are installed back-to-back on each side of the wall with the wall in between. To further separate the signal between those two beacons, an electromagnetic shield, such as an aluminum foil, is inserted in between the BLE beacon and the wall. The shield preferably has a radius larger than the Bluetooth wavelength (approximately 12.5 cm) to effectively attenuate the signal on the other side of the electromagnetic shield.

The user mobile device detects the signals from both beacons on each side of the wall. By comparing the received signal strengths (i.e., RSSI values) of these two beacons, the mobile device is capable of determining on which side of the wall the mobile device is located. If this procedure is repeated for every wall inside a structure, then the room in which the user is located may accurately be determined. For large walls, multiple pairs of beacons may be used to extend the signal range. By design, the disclosed apparatus and method minimize the impact of environmental noise and calibration issues while maintaining high accuracy of room detection. The apparatus and method also work well no matter how the user carries his or her mobile device, since holding it in a particular position or keeping it in a pocket will not impact the relative strength of the pair of beacon signals.

According to a preferred embodiment, each beacon transmits its own unique identification (ID) value and the user mobile device stores a floor plan of the house or office. The floor plan data includes the location of each beacon (i.e., wall location) and the ID value of each beacon. Thus, the mobile device can identify the signal from each beacon, measure the RSSI of each beacon signal, and compare the RSSI values of pairs of beacons that are installed on opposite sides of the same wall in order to determine on which side of the wall the user mobile device is located.

FIGURE 1 illustrates exemplary installed Bluetooth Low Energy (BLE) beacons 130a and 130b according to an embodiment of the disclosure. BLE beacon 130a is positioned on shield 120a, which is installed on one surface of wall 110. BLE beacon 130b is positioned on shield 120b, which is installed on the opposite surface of wall 110. Shield 120a and shield 120b significantly reduce (attenuate) the beacon signal strength on the other side of the shield.

The radio frequency (RF) signal from BLE beacon 130a is attenuated by shield 120a (and also by shield 120b) on the side of the wall where BLE beacon 130b is installed. Therefore, in the room in which BLE beacon 130a is installed, the RF signal from BLE beacon 130a is significantly stronger than the RF signal from BLE beacon 130b, which is in a different room. Similarly, the RF signal from BLE beacon 130b is attenuated by shield 120b (and also by shield 120a) on the side of the wall where BLE beacon 130a is installed. Therefore, in the room in which BLE beacon 130b is installed, the RF signal from BLE beacon 130b is significantly stronger than the RF signal from BLE beacon 130a, which is in a different room.

In an exemplary embodiment, each of shields 120a and 120b may comprise a flat aluminum foil with a radius of greater than approximately 12.5 centimeters, which yields received signal strength indicator (RSSI) attenuation in the range of 20dB - 120dB, typically towards the higher end. Such a radius is larger than the Bluetooth wavelength (approximately 12.5 cm.). This attenuation is effective even from the distance of less than 10 meters. The attenuation switches quickly when the user passes through a door from room (i.e., one side of the wall) to another room (i.e., the other side of the wall). Wall 110 may be glass, wood, drywall, or concrete, it can also be regular office cubicle dividers, if the beacons and shields can be installed. The disclosed technique is highly reliable, even at the corners of a room.

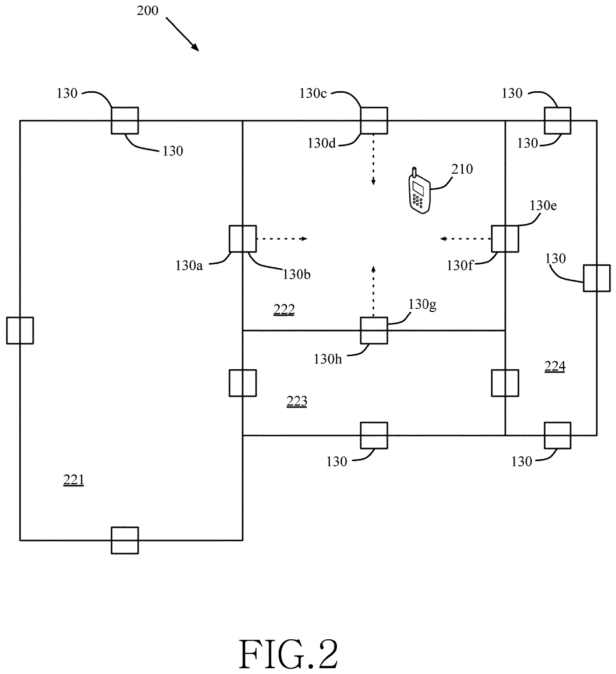

FIGURE 2 illustrates exemplary building floor plan 200 of a house or office with installed Bluetooth Low Energy (BLE) beacons 130 according to an embodiment of the disclosure. Floor plan 200 comprises four rooms, including room 221, room 222, room 223, and room 224. A user wireless device, mobile phone 210, is located in room 222. The user device need not be a smart phone, but may be another type of wireless device, such as a tablet, laptop, wearable or other conventional device. BLE beacons 130 are installed on both sides of every wall of floor plan 200, including exterior walls. Installing BLE beacons 130 on the exterior walls of the house or office enables mobile phone 210 to be located even when the user is just outside the house or office.

To determine which side of the wall is facing towards the user, mobile phone 210 compares the measured RSSI from each beacon 130 of a pair of beacons 130. The larger RSSI of the two measurements means that side of the wall is facing the user. This detection is extremely reliable, because both theoretically and practically, the beacon facing towards the user will always have a significantly stronger signal measured by mobile phone 210. This holds true even under normal environmental reflections and in the presence of occlusions, such as a wall, furniture, a human body, or the like. Since both beacons 130 in a beacon pair will be occluded similarly (except for the wall and shields between them), the relative RSSI comparison does not change because of occlusions or reflections. Because the disclosed method and apparatus only use the relative RSSI comparison between the pair of beacons 130, this approach does not require calibration of the receiver (i.e., the mobile device).

In preferred embodiments, the pair of beacons 130 may have the same specifications and transmit power. In certain cases, if the beacon pair is far away from the user mobile device, both RSSI measurements may be weak and the mobile device may either ignore that wall or assign a lower confidence value to the wall. With detected wall facing orientation and confidence in each wall, the user mobile device may reliably determine the specific room in which the user is located.

In the example in FIGURE 2, mobile phone 210 detects RF signals from a first pair of beacons 130a and 130b installed on opposing sides of a first interior wall and detects RF signals from a second pair of beacons 130c and 130d installed on opposing sides of an exterior wall. Mobile phone 210 also detects RF signals from a third pair of beacons 130e and 130f installed on opposing sides of a second interior wall and detects RF signals from a fourth pair of beacons 130g and 130h installed on opposing sides of a third interior wall.

Mobile device 210 stores in a memory floor plan 200, which includes the wall location and the unique identification (ID) value of each beacon 130. Mobile phone 210 identifies the signal from each beacon 130 in range, measures the RSSI of each received beacon signal, and compares the RSSI values of pairs of beacons 130 that are installed on opposite sides of the same wall in order to determine on which side of the wall mobile phone 210 is located.

Because mobile phone 210 detects a stronger RSSI from beacon 130b than beacon 130a, mobile phone 210 determines that it is on the same side of the left wall of room 222 as beacon 130b, as indicated by the dotted directional arrow projecting to the right from beacon 130b. Because mobile phone 210 detects a stronger RSSI from beacon 130d than beacon 130c, mobile phone 210 determines that it is on the same side of the exterior wall of room 222 as beacon 130d, as indicated by the dotted directional arrow projecting downward from beacon 130d. Because mobile phone 210 detects a stronger RSSI from beacon 130f than beacon 130e, mobile phone 210 determines that it is on the same side of the right wall of room 222 as beacon 130f, as indicated by the dotted directional arrow projecting to the right from beacon 130f. Because mobile phone 210 detects a stronger RSSI from beacon 130g than beacon 130h, mobile phone 210 determines that it is on the same side of the bottom wall of room 222 as beacon 130g, as indicated by the dotted directional arrow projecting upward from beacon 130g. Thus, given measurements from pairs of beacons from at least two walls, mobile phone 210 may accurately determine the room in which mobile phone 210 is located.

It is noted that some walls may attenuate the BLE signal passing through the walls. The wall simply acts like another shield between the pair of beacons 130, thereby further improving the disclosed technique. It is almost impossible for a wall to amplify a BLE signal passing through the wall. The disclose approach may be easily extended to homes or offices with multiple floors by installing beacon pairs on both sides of the floor, thereby determining on which floor the user is located. Although this approach is designed to detect a room, it can be further enhanced to detect smaller sub-spaces (such as connected living room, family room, and kitchen area in an open floor plan) by installing more beacon pairs on the floor, on the ceiling, or in furniture and other decorations to further partition the space.

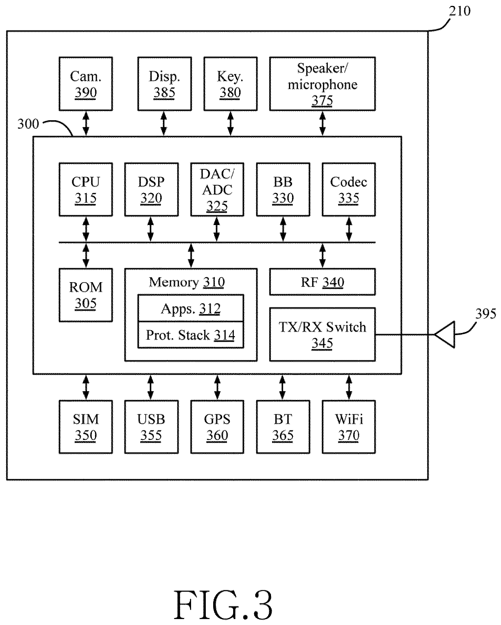

FIGURE 3 illustrates exemplary mobile phone 210 in greater detail according to an embodiment of the disclosure. Mobile phone 210 includes a room detection and location system according to the principles of the disclosure. Mobile phone 210 comprises core circuitry 300, which includes read-only memory (ROM) 305, random access memory (RAM) 310, central processing unit (CPU) 315, digital signal processor (DSP) 320, digital-to-analog converter (DAC)/analog-to-digital converter (ADC) circuitry 325, baseband (BB) circuitry block 330, codec circuitry block 335, radio frequency (RF) circuitry block 340, transmit (TX)/receive (RX) switch 345, and antenna 395.

In one embodiment, ROM 305 may store a boot-routine and other static data and RAM 310 may store an operating system (not shown), applications 312, and protocol stack 314. In an advantageous embodiment, ROM 305 and RAM 310 may comprise a single electronically erasable memory, such as a Flash memory, that is used in conjunction with a conventional RAM memory that is used to store dynamic data. Applications in memory 312 may include a room detection and location system application that enables mobile phone 210 to determine the room in which mobile phone 210 is located by measuring the RSSI values of multiple BLE beacons 130 in range. The room detection and location system application includes building floor plan 200 as describe in FIGURE 2.

Mobile phone 210 further comprises SIM card interface 350, USB interface 355, GPS receiver 360, Bluetooth (BT) transceiver 365, WiFi (or WLAN) transceiver 370, speaker and microphone circuitry block 375, keyboard 380, display 385, and camera 390. In some embodiment, keyboard 380 and display 385 may be implemented together as a touch screen display.

CPU 315 is responsible for the overall operation of mobile phone 210. In an exemplary embodiment, CPU 315 executes applications 312 and protocol stack 314. CPU 315 runs the application layer and a wide variety of applications may be run in a smart phone implementation. Applications 312 may include audio, video, and image/graphics applications. CPU 315 may run applications 312 that support various audio formats such as MP3, MP4, WAV, and rm. CPU 315 may run image applications 312 that support JPEG image formats and video applications 312 that support video formats (e.g., MPEG-1 to MPEG-5). CPU 315 may support various operating systems (not shown), such as Symbian, java, android, RT-Linux, Palm, and the like. For time critical applications, CPU 315 runs a real-time operating system (RTOS). In addition to the physical layer, there are other layers, including protocol stack 314, that enable mobile phone 210 to work with a network base station. In an exemplary embodiment, protocol stack 314 is ported on CPU 315.

DAC/ADC circuitry block 325 converts analog speech signals to digital signals, and vice versa, in mobile phone 210. In the transmit path, the ADC-converted digital signal is sent to a speech coder. Various types of ADCs are available, including sigma delta type. Automatic gain control (AGC) and automatic frequency control (AFC) are used in the receive path to control gain and frequency. AGC helps maintain satisfactory DAC performance by keepings signals within the dynamic range of the DAC circuits. AFC keeps frequency error within limit to achieve better receiver performance.

Baseband (BB) circuitry block 330 may be implemented as part of DSP 320, which executes many of the baseband processing functions (i.e., physical layer, Layer 1, or L1 functions). BB circuitry block 300 may be ported on DSP 320 to meet the latency and power requirements of mobile phone 210. BB circuitry block 330 converts voice and data to be carried over the air interface to I/Q baseband signals.

BB circuitry block 330 may change from modem to modem for various air interface standards, such as GSM, CDMA, WiMax, LTE, HSPA, and others. BB circuitry block 330 is often referred to as the physical layer, or Layer 1, or L1. For mobile phones that work on GSM networks, the baseband part (Layer 1) running on DSP 320 and the protocol stack 314 running on CPU 315 are based on the GSM standard. For CDMA mobile phones, the Layer 1 and protocol stack 314 are based on the CDMA standard, and so on, for the LTE and HSPA standards-based mobile phones.

For speech or audio inputs, codec circuitry block 335 may compress and decompress the signal to match the data rate to the frame in which the data is sent. By way of example, codec circuitry block 335 may convert speech at an 8 KHz sampling rate to a 13 kbps rate for a full rate speech traffic channel. To do this, a residually excited linear predictive coder (RELP) speech coder may be which compresses 260 bits into a 20ms. duration to achieve a 13 kbps rate.

The baseband or physical layer adds redundant bits to enable error detection as well as error correction. Error detection may be obtained with CRC and error correction using forward error correction techniques, such as a convolutional encoder (used in transmitter path) and a viterbi decoder (used in receive path). Interleaving may be done for the data, which helps in spreading the error over time, thereby helping the receiver de-interleave and decode the frame correctly.

RF circuitry block 340 includes an RF up-converter and an RF down-converter. For a GSM system, the RF up-converter converts modulated baseband signals (I and Q) either at zero intermediate frequency (IF) or some IF to RF frequency (890-915 MHz). The RF down-converter converts RF signals (935 to 960 MHz) to baseband signals (I and Q). For a GSM system, GMSK modulation is used.

Antenna 395 is a metallic object that converts and electro-magnetic signal to and electric signal and vice versa. Commonly used antennas may include a helix type, a planar inverted F-type, a whip, or a patch type. Microstrip patch type antennas are popular among mobile phones due to small size, easy integration on a printed circuit board and multi-frequency band of operation. In a preferred embodiment of mobile phone 210, antenna 395 may support different wire-area standards, including GSM, CDMA, LTE, and WiMAX, as well as short-range standards, including WiFi (WLAN), Bluetooth, and so on.

If antenna 395 comprises only one antenna used for both transmit and receive operations at different times, the TX/RX switch 345 couples both the transmit (TX) path and the receive (RX) path to antenna 395 at different times. TX/RS switch 345 is controlled automatically by DSP 320 based on a GSM frame structure with respect to the physical slot allocated for that particular GSM mobile phone in both the downlink and the uplink. For frequency division duplexing (FDD) systems, TX/RX switch 345 may be implemented as a diplexer that acts as filter to separate various frequency bands.

Mobile phone 210 provides connectivity with laptops or other devices using WiFi (or WLAN) transceiver 370, BT transceiver 365, and universal serial bus (USB) interface 355. Mobile phone 210 also uses GPS receiver 360 in applications 312 that require position information. If mobile phone 210 is a conventional smart phone, applications 312 may include many popular applications, such as Facebook, Twitter, a browser, and numerous games that come pre-installed with mobile phone 210.

Speaker and microphone circuitry block 375 comprises microphone circuitry (or mic) that converts acoustic energy (i.e., air pressure changes caused by speech or other sounds) to electrical signals for subsequent processing. Speaker and microphone 375 further comprises speaker circuitry that converts an electrical audio signal to an audible signal (pressure changes) for human hearing. The speaker circuitry may include an audio amplifier to get required amplification of the audio signal and may further include a volume control circuit to change (increase or decrease) the amplitude of the audio signal.

Mobile phone 210 preferably includes camera 390. Presently, almost all mobile phones feature a camera module. Camera 390 may comprise a 12 megapixel, 14 megapixel, or even a 41 megapixel camera.

Display 385 may comprise, by way of example, a liquid crystal display (LCD), a thin-film transistor (TFT) screen, and organic light emitting diode (OLED) display, a thin film diode (TFD) display, or a touch screen of capacitive and resistive type.

In a simple embodiment, keypad 380 may comprise a simple matrix type keypad that contains numeric digits (0 to 9), alphabetic characters (A to Z), special characters, and specific function keys. In a more advanced embodiment for a smart phone implementation, keypad 380 may be implemented in the mobile phone software, so that keyboard 380 appears on display 385 and is operated by the user using the touch of a finger tip.

In a preferred embodiment, the receive path circuitry of DSP 320 and/or BB circuitry block 330 is configured to measure and store the RSSI value of each detected beacon signal. The receive path circuitry of DSP 320 and/or BB circuitry block 330 may also determine the ID value of each beacon 130 that is detected.

According to the principles of the disclosure, applications 312 include a room detection and location application that is executed by CPU 315. Under control of CPU 315, the room detection and location application detects RF signals from multiple BLE beacons 130, determines the RSSI value of the detected RF signal received from each detected beacon 130, and identifies each detected beacon 130 by the unique ID value transmitted by each detected beacon 130. The room detection and location application includes one or more floor plans, including building floor plan 200. The room detection and location application uses the RSSI values, the corresponding ID values, and building floor plan 200 to determine the room in which mobile phone 210 is located.

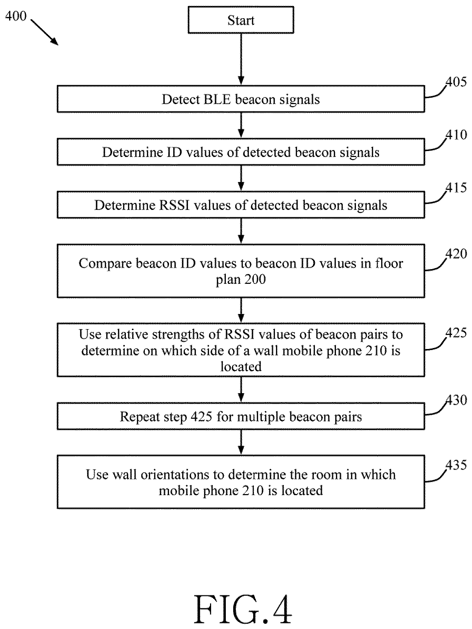

FIGURE 4 depicts flow diagram 400, which illustrates the operation of mobile phone 210 executing an exemplary room detection and location application according to an embodiment of the disclosure. Initially, mobile phone 210 detects BLE beacon signals from multiple BLE beacons 130 in the house or office space (step 405). For each detected beacon signal, mobile phone 210 determines the ID value transmitted by each detected beacon (step 410) and further determines the RSSI value for each detected beacon (step 415). Mobile phone 210 then compares the received beacon ID values to the beacon ID values stored in floor plan 200 (step 420). This enables mobile phone 210 to determine the locations of all beacons 130 for which a beacon signal was received and to identify pairs of detected beacons on opposing sides of the same wall.

Next, for each beacon pair, mobile phone 210 uses the relative strengths of the RSSI value for each beacon in the beacon pair to determine on which side of the same wall mobile phone 210 is located (step 425). Mobile phone 210 repeats step 425 for all pairs of detected beacons 130 (step 430). At this point, mobile phone 210 has determined its orientation with respect to multiple walls. Mobile phone 210 then uses the wall orientations to determine the room in which mobile phone 210 is located (step 435).

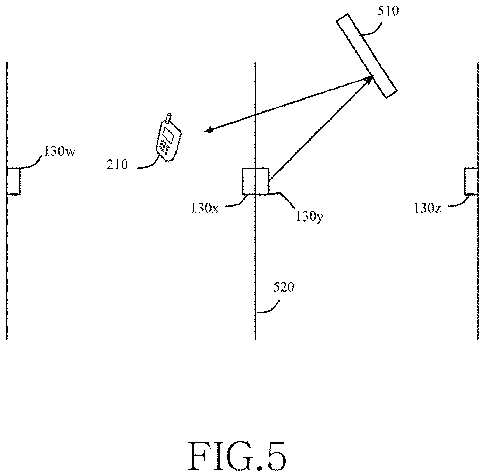

FIGURE 5 illustrates a scenario in which a beacon in a different room may have a stronger received signal due to reflections and occlusions. In FIGURE 5, the signal from beacon 130y reflects off object 510 and produces a stronger RSSI signal at mobile 210 than beacon 130x, which is on the same side of wall 520 as mobile phone 210. This may be worsened if another object (not shown) is between mobile phone 210 and beacon 130x, thereby occluding the BLE signal from beacon 130x. To minimize the probability of mobile phone 210 determining incorrectly that it is in the same room as beacon 130y, two additional beacons, beacon 130w and beacon 130z, may be used as a reference check. Therefore, the mobile phone 210 may perform the following algorithm to prevent false readings:
1) If signals from both beacon 130w and beacon 130x are stronger than any from beacon 130y and beacon 130z, then mobile phone 210 is on the left side of wall 520.
2) If signals from both beacon 130y and beacon 130z are stronger than any from beacon 130w and beacon 130x, then mobile phone 210 is on the right side of wall 520.
3) Ignore all other cases.

The general idea is that to make a valid determination, all beacons on one side of the wall should be consistent when compared with all beacons on the other side. If not, then wait for the next valid sampling.

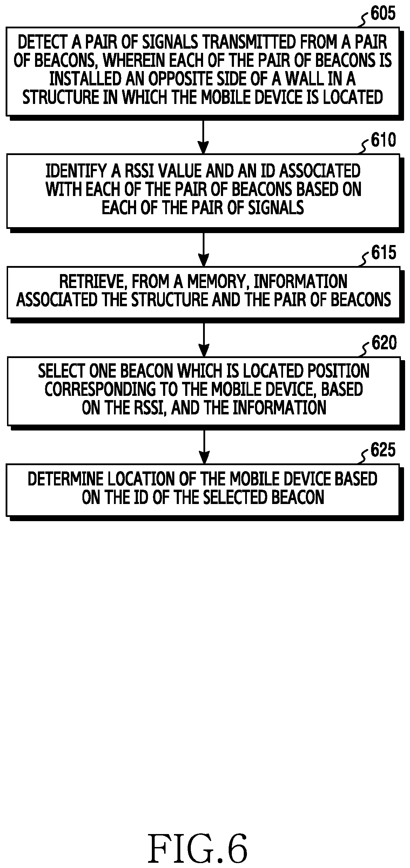

FIGURE 6 depicts flow diagram 600, which illustrates the operation of mobile device executing an exemplary room detection and location application according to another embodiment of the disclosure. The mobile device as described in FIGURE 6 may be mobile phone 210 in various embodiments.

Initially, the mobile device detects a pair of signals transmitted from a pair of beacons, wherein one of the pair of beacons is installed on a side of a wall and another one of the pair of beacons is installed on opposing side of the wall (step 605). The pair of beacons may comprise BLE beacons. The mobile device identifies a received signal strength indicator (RSSI) value and an identification (ID) associated with each of the pair of beacons based on each of the pair of signals (step 610).

The mobile device retrieves, from a memory, information associated the structure and the pair of beacons and further determines the RSSI value for each detected beacon (step 615). The information indicates location of the wall in the structure, locations of the pair of beacons, and ID values of each of the pair of beacons.

The mobile device then select one beacon which is located position corresponding to the mobile device, based on the RSSI, and the information (step 620). More specifically, the mobile device selects one beacon which is located position corresponding to the mobile device by comparing strengths of the RSSI value of the pair of beacons, and by selecting one beacon having higher strength of the RSSI.

The mobile device determines location of the mobile device based on the ID of the selected beacon (step 625). In various embodiment, the mobile device may determines a room in which the mobile device is located based on the selected beacon from the pair of beacons and the selected beacon from the another pair of beacons.

## Claims

1. A mobile device (210) comprising:
a transceiver (365); and
a controller (315) operatively coupled to the transceiver (365),
wherein the controller (315) is configured to:
detect a first signal transmitted from a first beacon device (130a) and a second signal transmitted from a second beacon device (130b), wherein the first beacon device (130a) is installed on a first side of a wall (110) and the second beacon device (130b) is installed on a second side of the wall (110) opposite to the first side of the wall (110), such that the first beacon device (130a) and the second beacon device (130b) are installed back-to-back on each side of the wall (110);
identify an identification value associated with each of the first beacon device (130a) and the second beacon device (130b) based on the first signal and the second signal;
compare a strength of the first signal and a strength of the second signal;
determine a beacon device among the first beacon device (130a) and the second beacon device (130b) based on a result of the comparison and the identification values; and
determine a side of the wall (110) corresponding to a location of the mobile device (210) based on the determined beacon device.

2. The mobile device (210) of in claim 1, wherein the controller (315) is configured to:
compare a received signal strength indicator, RSSI, value of the first signal and a RSSI value of the second signal; and
select the beacon device having a higher RSSI value.

3. The mobile device (210) of claim 2, wherein the controller (315) is further configured to:
identify a received signal strength indicator, RSSI, value and an identification, ID, associated with each of a third beacon device (130c) and a fourth beacon device (130d), wherein the third beacon device (130c) is installed on a first side of another wall and the fourth beacon device (130d) is installed on a second side of the another wall opposite to the first side of the another wall such that the third beacon device (130c) and the fourth beacon device (130d) are installed back-to-back on each side of the another wall; and
select another beacon device among the third beacon device (130c) and the fourth beacon device (130d) based on the RSSI values.

4. The mobile device (210) of claim 3, wherein the controller (315) is configured to:
compare the RSSI value associated with each of the third beacon device (130c) and the fourth beacon device (130d); and
select the another beacon having a higher RSSI value.

5. The mobile device (210) of claim 3, wherein the controller (315) is configured to:
determine an area in which the mobile device (210) is located based on the selected beacon and the selected another beacon, wherein the area is a room or a sub-space of a room.

6. The mobile device (210) of claim 1, wherein the first beacon device (130a) comprises bluetooth low energy, BLE, beacon device.

7. The mobile device (210) of claim 1, wherein the controller (315) is further configured to retrieve, from a memory (310), information associated with each of the first beacon device (130a) and the second beacon device (130b), and
wherein the information indicates location of the wall, location of each of the first beacon device (130a) and the second beacon device (130b), and an identification, ID, of each of the first beacon device (130a) and the second beacon device (130b).

8. A method in a mobile device (210) comprising:
detecting (605) a first signal transmitted from a first beacon device (130a) and second signal transmitted from a second beacon device (130b), wherein the first beacon device (130a) is installed on a first side of a wall (110) and the second beacon device (130b) is installed on a second side of the wall (110) opposite to the first side of the wall (110), such that the first beacon device (130a) and the second beacon device (130b) are installed back-to-back on each side of the wall (110);
identifying an identification value associated with each of the first beacon device (130a) and the second beacon device (130b) based on the first signal and the second signal;
comparing a strength of the first signal and a strength of the second signal;
determining (620) a beacon device among the first beacon device (130a) and the second beacon device (130b) based on a result of the comparison and the identification values; and
determining (625) a side of the wall (110) corresponding to a location of the mobile device (210) based on the determined beacon device.

9. The method of claim 8, wherein the comparing the strength comprises comparing a received signal strength indicator, RSSI, value of the first signal and a RSSI value of the second signal; and
wherein the determining (620) the beacon device comprises selecting the beacon device having a higher RSSI value.

10. The method of claim 9, further comprising:
identifying (430) a received signal strength indicator, RSSI, value and an identification, ID, associated with each of a third beacon device (130c) and a fourth beacon device (130d), wherein the third beacon device (130c) is installed on a first side of another wall and the fourth beacon device (130d) is installed on a second side of the another wall opposite to the first side of the another wall, such that the third beacon device (130c) and the fourth beacon device (130d) are installed back-to-back on each side of the another wall; and
selecting another beacon device among the third beacon device (130c) and the fourth beacon device (130d) based on the RSSI.

11. The method of claim 10, wherein selecting the another beacon device comprises:
comparing (425) the RSSI value associated with each of the third beacon device (130c) and the fourth beacon device (130d); and
selecting the another beacon having a higher RSSI value.

12. The method of claim 10, wherein the determining (625) the area comprises:
determining an area in which the mobile device (210) is located based on the selected beacon and the selected another beacon, wherein the area is a room or a sub-space of a room.

13. The method of claim 8, wherein the first beacon device (130a) comprises bluetooth low energy, BLE, beacon device.

14. The method of claim 8, further comprising retrieving, from a memory (310), information associated with each of the first beacon device (130a) and the second beacon device (130b),
wherein the information indicates location of the wall, location of each the first beacon device (130a) and the second beacon device (130b), and an identification, ID, of each of the first beacon device (130a) and the second beacon device (130b).

15. A system comprising:
a first beacon device (130a) installed in a first side of a wall (110); and
a second beacon device (130b) installed in a second side of the wall (110) opposite to the first side of the wall (110), such that the first beacon device (130a) and the second beacon device (130b) are installed back-to-back on each side of the wall (110);
wherein the first beacon device (130a) and the second beacon device (130b) are configured to transmit signals including an identification value associated with the respective beacon device, each of the signals having same strengths with each other; and
a mobile device according to any one of claims 1 to 7.

## Patentansprüche

1. Mobiles Gerät (210), umfassend:
einen Sender-Empfänger (365); und
eine Steuerung (315), die betriebsmäßig mit dem Sender-Empfänger (365) verbunden ist; wobei die Steuerung (315) konfiguriert ist, um:
ein erstes Signal, das von einem ersten Bakengerät (130a) gesendet wird, und ein zweites Signal, das von einem zweiten Bakengerät (130b) gesendet wird, zu erfassen, wobei das erste Bakengerät (130a) an einer ersten Seite einer Wand (110) installiert ist und das zweite Bakengerät (130b) an einer zweiten Seite der Wand (110) gegenüber der ersten Seite der Wand (110) installiert ist, so dass das erste Bakengerät (130a) und das zweite Bakengerät (130b) Rückseite an Rückseite an jeder Seite der Wand (110) installiert sind;
einen Identifikationswert, der jedem von dem ersten Bakengerät (130a) und dem zweiten Bakengerät (130b) zugeordnet ist, basierend auf dem ersten Signal und dem zweiten Signal zu identifizieren;
eine Stärke des ersten Signals und eine Stärke des zweiten Signals zu vergleichen; ein Bakengerät unter dem ersten Bakengerät (130a) und dem zweiten Bakengerät (130b) basierend auf einem Ergebnis des Vergleichs und den Identifikationswerten zu bestimmen; und
eine Seite der Wand (110), die einem Standort des mobilen Geräts (210) entspricht, basierend auf dem bestimmten Bakengerät zu bestimmen.

2. Mobiles Gerät (210) nach Anspruch 1, wobei die Steuerung (315) konfiguriert ist, um:
einen Empfangsfeldstärkeindikator, RSSI, -Wert des ersten Signals und einen RSSI-Wert des zweiten Signals zu vergleichen; und
das Bakengerät auszuwählen, das einen höheren RSSI-Wert aufweist.

3. Mobiles Gerät (210) nach Anspruch 2, wobei die Steuerung (315) ferner konfiguriert ist, um:
einen Empfangsfeldstärkeindikator, RSSI, -Wert und eine Identifikation, ID, die jedem von einem dritten Bakengerät (130c) und einem vierten Bakengerät (130d) zugeordnet sind, zu identifizieren, wobei das dritte Bakengerät (130c) an einer ersten Seite einer anderen Wand installiert ist und das vierte Bakengerät (130d) an einer zweiten Seite der anderen Wand gegenüber der ersten Seite der anderen Wand installiert ist, so dass das dritte Bakengerät (130c) und das vierte Bakengerät (130d) Rückseite an Rückseite an jeder Seite der anderen Wand installiert sind; und
ein anderes Bakengerät unter dem dritten Bakengerät (130c) und dem vierten Bakengerät (130d) basierend auf den RSSI-Werten auszuwählen.

4. Mobiles Gerät (210) nach Anspruch 3, wobei die Steuerung (315) konfiguriert ist, um:
den RSSI-Wert, der jedem von dem dritten Bakengerät (130c) und dem vierten Bakengerät (130d) zugeordnet ist, zu vergleichen; und
die andere Bake auszuwählen, die einen höheren RSSI-Wert aufweist.

5. Mobiles Gerät (210) nach Anspruch 3, wobei die Steuerung (315) konfiguriert ist, um:
einen Bereich, in dem sich das mobile Gerät (210) befindet, basierend auf der ausgewählten Bake und der ausgewählten anderen Bake zu bestimmen, wobei der Bereich ein Raum oder ein Unterraum eines Raums ist.

6. Mobiles Gerät (210) nach Anspruch 1, wobei das erste Bakengerät (130a) ein Bluetooth Low Energy, BLE, -Bakengerät umfasst.

7. Mobiles Gerät (210) nach Anspruch 1, wobei die Steuerung (315) ferner konfiguriert ist, um aus einem Speicher (310) Informationen abzurufen, die jedem von dem ersten Bakengerät (130a) und dem zweiten Bakengerät (130b) zugeordnet sind, und
wobei die Informationen den Standort der Wand, den Standort von jedem von dem ersten Bakengerät (130a) und dem zweiten Bakengerät (130b) und eine Identifikation, ID, von jedem von dem ersten Bakengerät (130a) und dem zweiten Bakengerät (130b) angeben.

8. Verfahren in einem mobilen Gerät (210), umfassend:
Erfassen (605) eines ersten Signals, das von einem ersten Bakengerät (130a) gesendet wird, und eines zweiten Signals, das von einem zweiten Bakengerät (130b) gesendet wird, wobei das erste Bakengerät (130a) an einer ersten Seite einer Wand (110) installiert ist und das zweite Bakengerät (130b) an einer zweiten Seite der Wand (110) gegenüber der ersten Seite der Wand (110) installiert ist, so dass das erste Bakengerät (130a) und das zweite Bakengerät (130b) Rückseite an Rückseite an jeder Seite der Wand (110) installiert sind;
Identifizieren eines Identifikationswerts, der jedem von dem ersten Bakengerät (130a) und dem zweiten Bakengerät (130b) zugeordnet ist, basierend auf dem ersten Signal und dem zweiten Signal; Vergleichen einer Stärke des ersten Signals und einer Stärke des zweiten Signals; Bestimmen (620) eines Bakengeräts unter dem ersten Bakengerät (130a) und dem zweiten Bakengerät (130b) basierend auf einem Ergebnis des Vergleichs und den Identifikationswerten; und
Bestimmen (625) einer Seite der Wand (110), die einem Standort des mobilen Geräts (210) entspricht, basierend auf dem bestimmten Bakengerät.

9. Verfahren nach Anspruch 8, wobei das Vergleichen der Stärke das Vergleichen eines Empfangsfeldstärkeindikator, RSSI, -Werts des ersten Signals und eines RSSI-Werts des zweiten Signals umfasst; und
wobei das Bestimmen (620) des Bakengeräts das Auswählen des Bakengeräts umfasst, das einen höheren RSSI-Wert aufweist.

10. Verfahren nach Anspruch 9, ferner umfassend:
Identifizieren (430) eines Empfangsfeldstärkeindikators, RSSI, -Werts und einer Identifikation, ID, die jedem von einem dritten Bakengerät (130c) und einem vierten Bakengerät (130d) zugeordnet sind, wobei das dritte Bakengerät (130c) an einer ersten Seite einer anderen Wand installiert ist und das vierte Bakengerät (130d) an einer zweiten Seite der anderen Wand gegenüber der ersten Seite der anderen Wand installiert ist, so dass das dritte Bakengerät (130c) und das vierte Bakengerät (130d) Rückseite an Rückseite an jeder Seite der anderen Wand installiert sind; und
Auswählen eines anderen Bakengeräts unter dem dritten Bakengerät (130c) und dem vierten Bakengerät (130d) basierend auf dem RSSI.

11. Verfahren nach Anspruch 10, wobei das Auswählen des anderen Bakengeräts umfasst:
Vergleichen (425) des RSSI-Werts, der jedem von dem dritten Bakengerät (130c) und dem vierten Bakengerät (130d) zugeordnet ist; und
Auswählen der anderen Bake, die einen höheren RSSI-Wert aufweist.

12. Verfahren nach Anspruch 10, wobei das Bestimmen (625) des Bereichs umfasst: Bestimmen eines Bereichs, in dem sich das mobile Gerät (210) befindet, basierend auf der ausgewählten Bake und der ausgewählten anderen Bake, wobei der Bereich ein Raum oder ein Unterraum eines Raumes ist.

13. Verfahren nach Anspruch 8, wobei das erste Bakengerät (130a) ein Bluetooth Low Energy, BLE, -Bakengerät umfasst.

14. Verfahren nach Anspruch 8, ferner umfassend das Abrufen von Informationen aus einem Speicher (310), die jedem von dem ersten Bakengerät (130a) und dem zweiten Bakengerät (130b) zugeordnet sind,
wobei die Informationen den Standort der Wand, den Standort von jedem von dem ersten Bakengerät (130a) und dem zweiten Bakengerät (130b) und eine Identifikation, ID, von jedem von dem ersten Bakengerät (130a) und dem zweiten Bakengerät (130b) angeben.

15. System, umfassend:
ein erstes Bakengerät (130a), das in einer ersten Seite einer Wand (110) installiert ist; und
ein zweites Bakengerät (130b), das in einer zweiten Seite der Wand (110) gegenüber der ersten Seite der Wand (110) installiert ist, so dass das erste Bakengerät (130a) und das zweite Bakengerät (130b) Rückseite an Rückseite an jeder Seite der Wand (110) installiert sind;
wobei das erste Bakengerät (130a) und das zweite Bakengerät (130b) konfiguriert sind, um Signale zu senden, die einen Identifikationswert umfassen, der dem jeweiligen Bakengerät zugeordnet ist, wobei jedes der Signale gleiche Stärken untereinander aufweist; und ein mobiles Gerät gemäß einem der Ansprüche 1 bis 7.

## Revendications

1. Dispositif mobile (210) comprenant :
un émetteur-récepteur (365) ; et
un dispositif de commande (315) couplé fonctionnellement à l'émetteur-récepteur (365), ledit dispositif de commande (315) étant conçu pour :
détecter un premier signal émis à partir d'un premier dispositif de balise (130a) et un second signal émis à partir d'un deuxième dispositif de balise (130b), ledit premier dispositif de balise (130a) étant installé sur un premier côté d'une paroi (110) et ledit deuxième dispositif de balise (130b) étant installé sur un second côté de la paroi (110) opposé au premier côté de la paroi (110), de sorte que le premier dispositif de balise (130a) et le deuxième dispositif de balise (130b) soient installés dos à dos sur chaque côté de la paroi (110) ;
identifier une valeur d'identification associée à chacun du premier dispositif de balise (130a) et du deuxième dispositif de balise (130b) sur la base du premier signal et du second signal ;
comparer une intensité du premier signal et une intensité du second signal ; déterminer un dispositif de balise parmi le premier dispositif de balise (130a) et le deuxième dispositif de balise (130b) sur la base d'un résultat de la comparaison et des valeurs d'identification ; et
déterminer un côté de la paroi (110) correspondant à un emplacement du dispositif mobile (210) sur la base du dispositif de balise déterminé.

2. Dispositif mobile (210) selon la revendication 1, ledit dispositif de commande (315) étant configuré pour :
comparer la valeur d'un indicateur d'intensité de signal reçu (RSSI) du premier signal et une valeur RSSI du deuxième signal ; et
sélectionner le dispositif de balise possédant une valeur RSSI plus élevée.

3. Dispositif mobile (210) selon la revendication 2, ledit dispositif de commande (315) étant en outre configurée pour :
identifier une valeur d'indicateur d'intensité de signal reçu (RSSI) et une identification (ID) associée à chacun d'un troisième dispositif de balise (130c) et d'un quatrième dispositif de balise (130d), ledit troisième dispositif de balise (130c) étant installé sur un premier côté d'une autre paroi et ledit quatrième dispositif de balise (130d) étant installé sur un second côté de l'autre paroi opposé au premier côté de l'autre paroi de sorte que le troisième dispositif de balise (130c) et le quatrième dispositif de balise (130d) soient installés dos-à-dos sur chaque côté de l'autre paroi ; et
sélectionner un autre dispositif de balise parmi le troisième dispositif de balise (130c) et le quatrième dispositif de balise (130d) sur la base des valeurs RSSI.

4. Dispositif mobile (210) selon la revendication 3, ledit dispositif de commande (315) étant configuré pour :
comparer la valeur RSSI associée à chacun du troisième dispositif de balise (130c) et du quatrième dispositif de balise (130d) ; et
sélectionner une autre balise possédant une valeur RSSI plus élevée.

5. Dispositif mobile (210) selon la revendication 3, ledit dispositif de commande (315) étant configuré pour :
déterminer une zone dans laquelle le dispositif mobile (210) est situé sur la base de la balise sélectionnée et de l'autre balise sélectionnée, ladite zone étant une pièce ou un sous-espace d'une pièce.

6. Dispositif mobile (210) selon la revendication 1, ledit premier dispositif de balise (130a) comprenant un dispositif de balise de faible énergie Bluetooth (BLE).

7. Dispositif mobile (210) selon la revendication 1, ledit dispositif de commande (315) étant en outre configuré pour récupérer, à partir d'une mémoire (310), des informations associées à chacun du premier dispositif de balise (130a) et du deuxième dispositif de balise (130b), et
lesdites informations indiquant l'emplacement de la paroi, l'emplacement de chacun du premier dispositif de balise (130a) et du deuxième dispositif de balise (130b), et une identification (ID) de chacun du premier dispositif de balise (130a) et du deuxième dispositif de balise (130b).

8. Procédé dans un dispositif mobile (210) comprenant :
la détection (605) d'un premier signal émis à partir d'un premier dispositif de balise (130a) et un second signal émis à partir d'un deuxième dispositif de balise (130b), ledit premier dispositif de balise (130a) étant installé sur un premier côté d'une paroi (110) et ledit deuxième dispositif de balise (130b) étant installé sur un second côté de la paroi (110) opposé au premier côté de la paroi (110), de sorte que le premier dispositif de balise (130a) et le deuxième dispositif de balise (130b) soient installés dos-à-dos sur chaque côté de la paroi (110) ;
l'identification d'une valeur d'identification associée à chacun du premier dispositif de balise (130a) et du deuxième dispositif de balise (130b) sur la base du premier signal et du second signal ; la comparaison d'une intensité du premier signal et d'une intensité du second signal ; la détermination (620) d'un dispositif de balise parmi le premier dispositif de balise (130a) et le deuxième dispositif de balise (130b) sur la base d'un résultat de la comparaison et des valeurs d'identification ; et
la détermination (625) d'un côté de la paroi (110) correspondant à un emplacement du dispositif mobile (210) sur la base du dispositif de balise déterminé.

9. Procédé selon la revendication 8, ladite comparaison de l'intensité comprenant la comparaison d'une valeur d'indicateur d'intensité de signal reçu (RSSI) du premier signal et d'une valeur RSSI du second signal ; et
ladite détermination (620) du dispositif de balise comprenant la sélection du dispositif de balise possédant une valeur RSSI plus élevée.

10. Procédé selon la revendication 9, comprenant en outre :
l'identification (430) d'une valeur d'indicateur d'intensité de signal reçu (RSSI) et d'une identification (ID) associés à chacun d'un troisième dispositif de balise (130c) et d'un quatrième dispositif de balise (130d), ledit troisième dispositif de balise (130c) étant installé sur un premier côté d'une autre paroi et le quatrième dispositif de balise (130d) étant installé sur un second côté de l'autre paroi opposé au premier côté de l'autre paroi, de sorte que le troisième dispositif de balise (130c) et le quatrième dispositif de balise (130d) soient installés dos-à-dos sur chaque côté de l'autre paroi ; et
la sélection d'un autre dispositif de balise parmi le troisième dispositif de balise (130c) et le quatrième dispositif de balise (130d) sur la base du RSSI.

11. Procédé selon la revendication 10, ladite sélection de l'autre dispositif de balise comprenant :
la comparaison (425) de la valeur RSSI associée à chacun du troisième dispositif de balise (130c) et du quatrième dispositif de balise (130d) ; et
la sélection de l'autre balise possédant une valeur RSSI plus élevée.

12. Procédé selon la revendication 10, ladite détermination (625) de la zone comprenant : la détermination d'une zone dans laquelle le dispositif mobile (210) est situé sur la base de la balise sélectionnée et de l'autre balise sélectionnée, ladite zone étant une pièce ou un sous-espace d'une pièce.

13. Procédé selon la revendication 8, ledit premier dispositif de balise (130a) comprenant un dispositif de balise de faible énergie Bluetooth (BLE).

14. Procédé selon la revendication 8, comprenant en outre la récupération, à partir d'une mémoire (310), des informations associées à chacun du premier dispositif de balise (130a) et du deuxième dispositif de balise (130b), lesdites informations indiquant l'emplacement de la paroi, l'emplacement de chacun du premier dispositif de balise (130a) et du deuxième dispositif de balise (130b), et une identification (ID) de chacun du premier dispositif de balise (130a) et du deuxième dispositif de balise (130b).

15. Système comprenant :
un premier dispositif de balise (130a) installé dans un premier côté d'une paroi (110) ; et
un deuxième dispositif de balise (130b) installé dans un second côté de la paroi (110) opposé au premier côté de la paroi (110), de sorte que le premier dispositif de balise (130a) et le deuxième dispositif de balise (130b) soient installés dos-à-dos de chaque côté de la paroi (110) ;
ledit premier dispositif de balise (130a) et ledit deuxième dispositif de balise (130b) étant configurés pour émettre des signaux comprenant une valeur d'identification associée au dispositif de balise respectif, chacun des signaux possédant les mêmes intensités l'un avec l'autre ; et un dispositif mobile selon l'une quelconque des revendications 1 à 7.
